# EUROPÄISCHE PATENTSCHRIFT

(11) **EP 4 184 049 B1**
(45) Veröffentlichungstag und Bekanntmachung des Hinweises auf die Patenterteilung: **08.10.2025**
(21) Anmeldenummer: 22207553.3
(22) Anmeldetag: 15.11.2022
(51) Int. Cl.: F16L 37/14

(54) **VERBINDUNGSELEMENT**
CONNECTING ELEMENT
ELÉMENT DE LIAISON

(30) Priorität: 17.11.2021 DE 102021129988
(43) Veröffentlichungstag der Anmeldung: 24.05.2023
(73) Patentinhaber: HDT Veritas Hessen GmbH, 63571 Gelnhausen (DE)
(72) Erfinder: HATTASS, Dirk, 63584 Gründau (DE); WERTH, Josef, 63571 Gelnhausen (DE); KARI, Artur, 63762 Großostheim (DE); STEHLE, Alexander, 55127 Mainz (DE)
(74) Vertreter: Patentship Patentanwaltsgesellschaft mbH

(56) Entgegenhaltungen:
- AT-B1- 523 394
- DE-A1- 102006 038 841
- US-A- 4 244 608
- US-A1- 2019 226 616

## Beschreibung

Die vorliegende Erfindung betrifft ein Verbindungselement zum Herstellen einer Fluidverbindung mit zwei Fluidleitungen, sowie eine Fluidverbindungsanordnung umfassend ein Verbindungselement und eine erste und zweite Fluidleitung.

In einem herkömmlichen Fahrzeug wird eine Vielzahl von Fluidleitungen, wie z.B. Fluidschläuche, benötigt, um unterschiedliche Arten von Fluid zu leiten. Insbesondere wird in mit Wasserstoff-betriebenen Fahrzeugen Wasserstoff zu einer Brennstoffzelle, bzw. einem Verbrennungsmotor des Fahrzeugs durch als Wasserstoffleitungen ausgebildete Fluidleitungen geführt. Aufgrund des räumlich begrenzten Bauraums eines Fahrzeuges werden entsprechende Fluidleitungen, insbesondere Wasserstoffleitungen, oftmals in engen Biegeradien geführt und werden miteinander durch Verbindungselemente verbunden, welche eine fluiddichte Verbindung zwischen den verbundenen Fluidleitungen sicherstellen.

Aufgrund des hohen Drucks mit der Wasserstoff durch entsprechende Wasserstoffleitungen geleitet wird, werden Verbindungselemente benötigt, welche entsprechende Wasserstoffleitungen miteinander verbinden, und welche den hohen Anforderungen an die Fluiddichtigkeit genügen.

Die Druckschrift EP 3 279 539 B1 offenbart eine Haltemanschette für eine Verbindungseinrichtung.

Die Druckschrift DE 10 2006 038 841 A1 offenbart eine Vorrichtung zur axialen Verbindung eines äußeren Rohrteils mit einem in das Rohrteil eingreifenden koaxialen Zapfenteil oder inneren Rohrteil, insbesondere zur Verbindung eines Ablaufstutzens eines Injektors, zur Kraftstoffeinspritzung in Brennkraftmaschinen.

Die Druckschrift AT 523394 B1 offenbart eine Verfahren zum Koppeln von Steckverbindern zu einer Steckbaugruppe.

Die Druckschrift US 2019/0226616 A1 offenbart einen Schnellverbinder.

Die Druckschrift US 4,244,608 offenbart einen weiblichen Verbinder zur Verwendung mit einem männlichen Verbinder.

Es ist die der Erfindung zugrundeliegende Aufgabe, ein Verbindungselement und eine Fluidverbindungsanordnung für eine Fluidverbindung anzugeben, welches, bzw. welche bei hohem Druck eine ausreichende Fluiddichtigkeit sicherstellt.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verbindungselement zum Herstellen einer Fluidverbindung mit zwei Fluidleitungen gelöst, mit einer Aufnahmehülse, welche mit einer ersten Fluidleitung fluidtechnisch verbindbar ist, wobei die Aufnahmehülse eine Hülsenwandung aufweist, welche einen Hülseninnenraum begrenzt, wobei in der Hülsenwandung ein erster Hülsenschlitz und ein dem ersten Hülsenschlitz gegenüberliegender zweiter Hülsenschlitz geformt ist, einem Einführstutzen, welcher mit einer zweiten Fluidleitung fluidtechnisch verbindbar ist, wobei der Einführstutzen in den Hülseninnenraum der Aufnahmehülse einführbar ist, um die Fluidverbindung bereitzustellen, wobei in dem Einführstutzen ein erster Stutzenschlitz und ein dem ersten Stutzenschlitz gegenüberliegender zweiter Stutzenschlitz geformt ist, wobei im eingeführten Zustand des Einführstutzens der erste Hülsenschlitz und der erste Stutzenschlitz fluchtend zueinander angeordnet sind und der zweite Hülsenschlitz und der zweite Stutzenschlitz fluchtend zueinander angeordnet sind, und einem Verriegelungselement, welches einen ersten Verriegelungsarm und einen dem ersten Verriegelungsarm gegenüberliegenden zweiten Verriegelungsarm aufweist, wobei im eingeführten Zustand des Einführstutzens der erste Verriegelungsarm zumindest abschnittsweise in dem ersten Hülsenschlitz und dem ersten Stutzenschlitz angeordnet ist und der zweite Verriegelungsarm zumindest abschnittsweise in dem zweiten Hülsenschlitz und dem zweiten Stutzenschlitz angeordnet ist, um den Einführstutzen an der Aufnahmehülse zu verriegeln.

Dadurch wird beispielsweise der technische Vorteil erreicht, dass durch das Verbindungselement eine stabile und besonders fluiddichte Verbindung zwischen der Aufnahmehülse, welche mit der ersten Fluidleitung fluidtechnisch verbindbar ist, und dem Einführstutzen, welcher mit der zweiten Fluidleitung fluidtechnisch verbindbar ist, erreicht wird, welche einfach zu montieren ist und hohen Druckbelastungen vorteilhaft widerstehen kann, ohne dass Fluid austritt.

Zudem kann die fluiddichte Verbindung zwischen dem Einführstutzen und der Aufnahmehülse auch wieder einfach gelöst werden, z.B. bei einer beabsichtigten Demontage des Verbindungselements, in dem das Verriegelungselement wieder aus den entsprechenden Schlitzen herausgezogen wird.

Insbesondere ist die Aufnahmehülse und/oder der Einführstutzen jeweils als ein Kunststoffspritzgussteil ausgebildet, welches einfach zu fertigen ist.

Insbesondere ist die Aufnahmehülse, mit der ersten Fluidleitung stoffschlüssig, insbesondere verklebt oder verschweißt, formschlüssig, oder kraftschlüssig, insbesondere verrastet, verbindbar, bzw. verbunden. Insbesondere ist der Einführstutzen, mit der zweiten Fluidleitung stoffschlüssig, insbesondere verklebt oder verschweißt, formschlüssig, oder kraftschlüssig, insbesondere verrastet, verbindbar, bzw. verbunden.

Insbesondere umfasst die erste und/oder zweite Fluidleitung einen Fluidschlauch oder ein Fluidrohr.

Insbesondere sind der erste Stutzenschlitz und der zweite Stutzenschlitz als separate Schlitze an dem Einführstutzen geformt. Alternativ sind insbesondere der erste und zweite Stutzenschlitz miteinander verbunden und bilden eine den Einführstutzen umlaufende Vertiefung, welche den ersten und zweiten Stutzenschlitz umfasst.

Insbesondere weist das Verriegelungselement eine U-Form auf.

In einer vorteilhaften Ausführungsform weist das Verriegelungselement einen Verbindungsabschnitt auf, welcher den ersten Verriegelungsarm mit dem zweiten Verriegelungsarm verbindet, wobei der erste und zweite Verriegelungsarm jeweils federelastisch mit dem Verbindungsabschnitt verbunden sind, um ein Aufspreizen des ersten und zweiten Verriegelungsarms beim Einführen des Verriegelungselements in die Aufnahmehülse zu erreichen.

Dadurch wird der technische Vorteil erreicht, dass die federelastisch mit dem Verbindungsabschnitt verbundenen Verriegelungsarme beim Einführen des Verriegelungselements in die entsprechenden Schlitze der Aufnahmehülse und des Einführstutzens vorteilhaft aufgespreizt werden können.

Insbesondere sind der erste und zweite Verriegelungsarm ausgebildet, in einem eingeführten Zustand des Verriegelungselements, den Einführstutzen, welcher in die Aufnahmehülse eingeführt ist, mit einer Kraft zu beaufschlagen, um eine stabile Verriegelung des Einführstutzens in der Aufnahmehülse sicherzustellen.

In einer vorteilhaften Ausführungsform weist der erste Verriegelungsarm eine erste Verriegelungskontur auf, und weist der zweite Verriegelungsarm eine der ersten Verriegelungskontur gegenüberliegende zweite Verriegelungskontur auf, wobei im eingeführten Zustand des Einführstutzens die erste und zweite Verriegelungskontur den Einführstutzen mit einer Kraft beaufschlagen, um den Einführstutzen an der Aufnahmehülse zu verriegeln.

Dadurch wird der technische Vorteil erreicht, dass die sich gegenüberliegenden Verriegelungskonturen der beiden Verriegelungsarme eine wirksame Aufnahme des Einführstutzens zwischen den beiden Verriegelungsarmen sicherstellen, so dass der Einführstutzen wirksam zwischen den beiden Verriegelungsarmen eingeklemmt wird, um die Verriegelung des Einführstutzens an der Aufnahmehülse sicherzustellen.

In einer vorteilhaften Ausführungsform ist der erste Verriegelungsarm durch eine vordere Hülsenschlitzöffnung des ersten Hülsenschlitzes in den Hülseninnenraum einführbar, und ist ein erstes Armende des ersten Verriegelungsarms durch eine der vorderen Hülsenschlitzöffnung gegenüberliegende hintere Hülsenschlitzöffnung des ersten Hülsenschlitzes wieder aus dem Hülseninnenraum herausführbar, und ist der zweite Verriegelungsarm durch eine vordere Hülsenschlitzöffnung des zweiten Hülsenschlitzes in den Hülseninnenraum einführbar, und ist ein zweites Armende des zweiten Verriegelungsarms durch eine der vorderen Hülsenschlitzöffnung gegenüberliegende hintere Hülsenschlitzöffnung des zweiten Hülsenschlitzes wieder aus dem Hülseninnenraum herausführbar.

Dadurch wird der technische Vorteil erreicht, dass der erste und zweite Verriegelungsarm jeweils durch den Hülseninnenraum hindurchgeführt werden, wobei das jeweilige Armende aus der jeweiligen hinteren Hülsenschlitzöffnung des jeweiligen Hülsenschlitzes wieder herausragt. Dadurch kann eine wirksame Verriegelung des Einführstutzens an der Aufnahmehülse durch das Verriegelungselement sichergestellt werden.

In einer vorteilhaften Ausführungsform weist der erste Verriegelungsarm und/oder der zweite Verriegelungsarm, insbesondere ein erstes Armende des ersten Verriegelungsarms und/oder ein zweites Armende des zweiten Verriegelungsarms, jeweils einen Verriegelungshaken auf, welcher ausgebildet ist, die Hülsenwandung zu hintergreifen, um eine verliersichere Verriegelung des Verriegelungselements an der Aufnahmehülse sicherzustellen.

Dadurch wird der technische Vorteil erreicht, dass durch die Anbringung des jeweiligen Verriegelungshakens an dem jeweiligen Armende des jeweiligen Verriegelungsarms ein unbeabsichtigtes Herausgleiten der Verriegelungsarme aus den Schlitzen verhindert wird, und sich somit die Verriegelung nicht unbeabsichtigt lösen kann.

In einer vorteilhaften Ausführungsform weist die Hülsenwandung an dem ersten Hülsenschlitz einen ersten Verriegelungsvorsprung und an dem zweiten Hülsenschlitz einen zweiten Verriegelungsvorsprung auf, wobei der Verriegelungshaken des ersten Verriegelungsarms ausgebildet ist, den ersten Verriegelungsvorsprung zu hintergreifen, und wobei der Verriegelungshaken des zweiten Verriegelungsarms ausgebildet ist, den zweiten Verriegelungsvorsprung zu hintergreifen, um eine verliersichere Verriegelung des Verriegelungselements an der Aufnahmehülse sicherzustellen.

Dadurch wird der technische Vorteil erreicht, dass die jeweiligen Verriegelungsvorsprünge Eingreifpunkte für den jeweiligen Verriegelungshaken des jeweiligen Verriegelungsarms bereitstellen, hinter diese der jeweilige Verriegelungshaken eingreifen kann, so dass eine wirksames Verriegelung sichergestellt werden kann.

In einer vorteilhaften Ausführungsform weist der Einführstutzen einen ersten Stutzenabschnitt mit einem ersten Stutzenaußendurchmesser und einen zweiten Stutzenabschnitt mit einem zweiten Stutzenaußendurchmesser auf, welcher geringer als der erste Stutzenaußendurchmesser ist, wobei der Hülseninnenraum einen zweiten Hülseninnenraum zur Aufnahme des zweiten Stutzenabschnitts und einen ersten Hülseninnenraum zur Aufnahme des ersten Stutzenabschnitts aufweist.

Dadurch wird der technische Vorteil erreicht, dass ein vorteilhaftes Einführen des Einführstutzens in die Aufnahmehülse sichergestellt wird. Der zweite Stutzenabschnitt mit dem geringeren zweiten Stutzenaußendurchmesser erstreckt sich hierbei von dem ersten Stutzenabschnitt mit dem größeren ersten Stutzenaußendurchmesser, so dass beide Stutzenabschnitte vorteilhaft in den jeweils komplementären zweiten Hülseninnenraum und ersten Hülseninnenraum eingeführt werden können.

In einer vorteilhaften Ausführungsform weist der Einführstutzen, insbesondere der zweite Stutzenabschnitt eine Aufnahmenut auf, in welcher ein Dichtungselement aufgenommen ist.

Dadurch wird der technische Vorteil erreicht, dass das Dichtungselement eine besonders wirksame fluidtechnische Abdichtung zwischen dem Einführstutzen, insbesondere dem zweiten Stutzenabschnitt, und der Hülsenwandung der Aufnahmehülse, insbesondere dem Bereich der Hülsenwandung, welche den zweiten Hülseninnenraum begrenzt, sicherstellt. Insbesondere ist das Dichtungselement als ein O-Ring geformt, welcher in einer den Einführstutzen umlaufenden Aufnahmenut aufgenommen ist.

Insbesondere weist der Einführstutzen, insbesondere der zweite Stutzenabschnitt eine erste und zweite Aufnahmenut auf, in welcher jeweils ein erstes und zweites Dichtungselement, insbesondere O-Ring, aufgenommen ist. Durch die Verwendung von zwei Dichtungselementen kann, z.B. bei Fluidverbindungen zum Leiten von Wasserstoff, eine doppelte Absicherung erreicht werden, falls z.B. eines der beiden Dichtungselemente während des Betriebs versagen sollte.

In einer vorteilhaften Ausführungsform weist der Einführstutzen, insbesondere der zweite Stutzenabschnitt, einen den Einführstutzen umlaufenden ersten Flansch und einen den Einführstutzen umlaufenden zweiten Flansch auf, wobei der erste und zweite Flansch insbesondere die Aufnahmenut zur Aufnahme des Dichtungselements begrenzen.

Dadurch wird der technische Vorteil erreicht, dass die beiden Flansche eine wirksame Aufnahme des Dichtungselements zwischen den beiden Flanschen sicherstellen.

Erfindungsgemäß weist das Verbindungselement eine erste Stabilisierungsbrücke und eine zweite Stabilisierungsbrücke auf, welche an gegenüberliegenden Außenseiten der Hülsenwandung der Aufnahmehülse angeordnet sind, um eine Stabilisierung des Verbindungselements sicherzustellen.

Dadurch wird der technische Vorteil erreicht, dass durch die Stabilisierungsbrücken auf die Hülsenwandung wirkende Kräfte wirksam aufgenommen werden können, um die mechanische Stabilität des Verbindungselements zu verbessern. Aufgrund des oftmals hohen Drucks von Fluid, welches durch das Verbindungselement geleitet wird, wird der in die Aufnahmehülse eingeführte Einführstutzen mit einer Kraft beaufschlagt, welche über das Verriegelungselement auf die Hülsenwandung, insbesondere im Bereich der Hülsenschlitze, abgeleitet wird, so dass die entsprechenden Stabilisierungsbrücken hierbei eine wirksame Reduktion von auf die Hülsenwandung wirkenden Kraftspitzen sicherstellen.

Erfindungsgemäß erstreckt sich die erste Stabilisierungsbrücke an der Außenseite der Hülsenwandung zumindest abschnittsweise über den ersten Hülsenschlitz, und erstreckt sich die zweite Stabilisierungsbrücke an der Außenseite der Hülsenwandung zumindest abschnittsweise über den zweiten Hülsenschlitz.

Dadurch wird der technische Vorteil erreicht, dass durch die Anordnung der jeweiligen Stabilisierungsbrücke an dem jeweiligen Hülsenschlitz eine besonders wirksame Stabilisierung der Hülsenwandung in dem Bereich sichergestellt wird, in welchem die signifikanteste Krafteintragung erfolgt.

In einer vorteilhaften Ausführungsform weist das Verbindungselement einen Verbindungssteg auf, welcher an der Außenseite der Hülsenwandung der Aufnahmehülse angeordnet und ausgebildet ist, ein erstes Brückenende der ersten Stabilisierungsbrücke mit einem zweiten Brückenende der zweiten Stabilisierungsbrücke zu verbinden.

Dadurch wird der technische Vorteil erreicht, dass durch den Verbindungssteg eine besonders vorteilhafte zusätzliche Stabilisierung der beiden Stabilisierungsbrücken sichergestellt wird.

In einer vorteilhaften Ausführungsform ist das Verriegelungselement aus einem Metall, insbesondere in Form einer gebogenen metallischen Feder, oder aus einem Kunststoff geformt.

Dadurch wird der technische Vorteil erreicht, dass ein stabiles Verriegelungselement erhalten wird, welches einfach zu fertigen ist.

In einer vorteilhaften Ausführungsform ist an einer Außenseite des Einführstutzens, insbesondere des ersten Stutzenabschnitts, ein Einführvorsprung angeordnet, welcher ausgebildet ist, beim Einführen des Einführstutzens in die Aufnahmehülse in eine an einer Innenseite der Hülsenwandung angeordnete Aufnahme einzugreifen, um eine verdrehsichere Aufnahme des Einführstutzens in der Aufnahmehülse sicherzustellen.

Dadurch wird der technische Vorteil erreicht, dass eine vorteilhafte Verdrehsicherung bereitgestellt werden kann.

Gemäß einem zweiten Aspekt der Erfindung wird die Aufgabe durch eine Fluidverbindungsanordnung gelöst, umfassend ein Verbindungselement nach dem ersten Aspekt, eine erste Fluidleitung und eine zweite Fluidleitung, wobei ein erstes Leitungsende der ersten Fluidleitung mit der Aufnahmehülse verbunden ist, und wobei ein zweites Leitungsende der zweiten Fluidleitung mit dem Einführstutzen verbunden ist.

Die in Bezug auf das Verbindungselement gemäß dem ersten Aspekt angeführten vorteilhaften Ausführungsformen gelten ebenso als vorteilhafte Ausführungsformen der Fluidverbindungsanordnung gemäß dem zweiten Aspekt.

Ausführungsbeispiele der Erfindung sind in den Zeichnungen dargestellt und werden im Folgenden näher beschrieben.

Es zeigen:
- Fig. 1: eine perspektivische Ansicht eines Verbindungselements gemäß einer Ausführungsform;
- Fig. 2: eine perspektivische Ansicht des in Fig. 1 dargestellten Verbindungselements in einem verriegelten Zustand;
- Fig. 3: eine weitere perspektivische Ansicht des in Fig. 2 dargestellten Verbindungselements in dem verriegelten Zustand;
- Fig. 4: eine perspektivische Ansicht eines Verbindungselements gemäß einer weiteren Ausführungsform;
- Fig. 5: eine perspektivische Ansicht des in Fig. 4 dargestellten Verbindungselements in einem verriegelten Zustand;
- Fig. 6: eine weitere perspektivische Ansicht des in Fig. 5 dargestellten Verbindungselements in dem verriegelten Zustand;

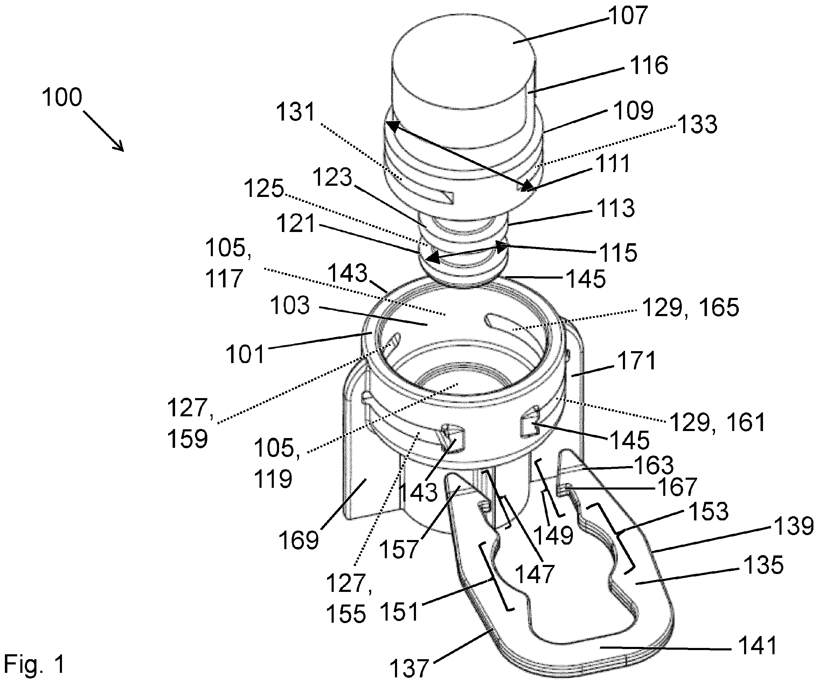

Die Fig. 1 zeigt eine perspektivische Ansicht eines Verbindungselements 100 zum Herstellen einer Fluidverbindung mit zwei in Fig. 1 nicht dargestellten Fluidleitungen. In der Fig. 1 ist eine Explosionsdarstellung des Verbindungselements 100 gezeigt.

Das Verbindungselement 100, bzw. die entsprechende in Fig. 1 nicht dargestellte Fluidverbindungsanordnung umfassend das Verbindungselement 100 und die beiden Fluidleitungen, und dient zum Herstellen einer Fluidverbindung in einer Vielzahl von fluidführenden Systemen eines Fahrzeuges. Das Verbindungselement 100 kann zur fluidtechnischen Verbindung von Kraftstoff-, Kühlflüssigkeits-, Ladeluft-, Bremsflüssigkeits-, Wasser-, Wasserstoff-, SCR-, und/oder Getriebeölleitungen in Fahrzeugen eingesetzt werden. Das Verbindungselement 100 gemäß der vorliegenden Offenbarung wird insbesondere zur fluidtechnischen Verbindung von Wasserstoffleitungen in Wasserstoff-betriebenen Fahrzeugen eingesetzt, wobei aufgrund des hohen Drucks des geleiteten Wasserstoffs besonders hohe Anforderung an die Fluiddichtigkeit der Fluidverbindung gestellt werden. Das Verbindungselement 100 kann insbesondere auch beispielsweise in Kühlmittel-führenden Fluidleitungen eingesetzt werden, welche insbesondere zur Kühlung von Batteriezellen in einem elektrisch angetriebenen Fahrzeug verwendet werden.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch fluidtechnische Schnittstellen miteinander verbunden werden, um eine wirksame Leitung von Fluid sicherzustellen. Hierbei werden an die fluidtechnischen Schnittstellen zwischen einer entsprechenden fluidführenden Leitung und einem entsprechenden Verbindungselement 100 hohe Anforderungen in Bezug auf Stabilität und Fluiddichtigkeit gestellt.

Das in Fig. 1 dargestellte Verbindungselement 100 dient zum Herstellen einer fluiddichten, insbesondere gasdichten, Verbindung zwischen den in Fig. 1 nicht dargestellten Fluidleitungen.

Das Verbindungselement 100 umfasst eine Aufnahmehülse 101, welche mit einer in Fig. 1 nicht dargestellte ersten Fluidleitung fluidtechnisch verbindbar ist. Die erste Fluidleitung ist insbesondere mit der Aufnahmehülse 101 stoffschlüssig, insbesondere verschweißt oder verklebt, formschlüssig, insbesondere aufgeschoben, und/oder kraftschlüssig, insbesondere verrastet, verbunden. Die Aufnahmehülse 101 weist eine Hülsenwandung 103 auf, welche einen Hülseninnenraum 105 begrenzt.

Das Verbindungselement 100 umfasst einen Einführstutzen 107, welcher mit einer in Fig. 1 nicht dargestellten zweiten Fluidleitung fluidtechnisch verbindbar ist. Die zweite Fluidleitung ist insbesondere mit dem Einführstutzen 107stoffschlüssig, insbesondere verschweißt oder verklebt, formschlüssig, insbesondere aufgeschoben, und/oder kraftschlüssig, insbesondere verrastet, verbunden. Der Einführstutzen 107 ist in den Hülseninnenraum 105 der Aufnahmehülse 101 einführbar, um die Fluidverbindung bereitzustellen.

Der Einführstutzen 107 weist einen ersten Stutzenabschnitt 109 mit einem ersten Stutzenaußendurchmesser 111 und einen zweiten Stutzenabschnitt 113 mit einem zweiten Stutzenaußendurchmesser 115 auf, welcher geringer als der erste Stutzenaußendurchmesser 111 ist.

Der Hülseninnenraum 105 weist einen ersten Hülseninnenraumbereich 117 zur Aufnahme des ersten Stutzenabschnitts 109 und einen zweiten Hülseninnenraumbereich 119 zur Aufnahme des zweiten Stutzenabschnitts 113 auf. Dementsprechend ist auch ein in Fig. 1 nicht dargestellter Innendurchmesser des zweiten Hülseninnenraumbereichs 119 (welcher mit dem zweiten Stutzenaußendurchmesser 115 korreliert ist) geringer als ein Innendurchmesser des ersten Hülseninnenraumbereich 117 (welcher mit dem ersten Stutzenaußendurchmesser 111 korreliert ist).

Somit kann der zweite Stutzenabschnitt 113 des Einführstutzens 107 vorteilhaft in dem zweiten Hülseninnenraumbereich 119 der Aufnahmehülse 101 aufgenommen werden und kann der erste Stutzenabschnitt 109 des Einführstutzens 107 vorteilhaft in dem ersten Hülseninnenraumbereich 117 der Aufnahmehülse 101 aufgenommen werden.

In der Fig. 1 ist zudem noch ein Verbindungsabschnitt 116 des Einführstutzens 107 zu erkennen, welcher auf einer dem zweiten Stutzenabschnitt 113 abgewandten Seite des ersten Stutzenabschnitts 109 angeordnet ist, und welcher insbesondere zur fluidtechnischen Verbindung mit der zweiten Fluidleitung geformt ist.

Aus der Fig. 1 ist ferner zu entnehmen, dass der Einführstutzen 107, insbesondere der zweite Stutzenabschnitt 113, einen den Einführstutzen 107 umlaufenden ersten Flansch 121 und einen den Einführstutzen 107 umlaufenden zweiten Flansch 123 aufweist.

Der Einführstutzen 107, insbesondere der zweite Stutzenabschnitt 113, weist ferner insbesondere eine Aufnahmenut 125 auf, welche zwischen den beiden Flanschen 121, 123 und den Einführstutzen 107 umlaufend angeordnet ist. In der Aufnahmenut 125 ist ein in Fig. 1 nicht dargestelltes zumindest eines Dichtungselement aufgenommen, welches im eingesteckten Zustand des Einführstutzens 107 ausgebildet ist, gegen die Hülsenwandung 103 der Aufnahmehülse 101 gepresst zu werden, um eine fluidtechnische Abdichtung zwischen dem Einführstutzen 107 und der Aufnahmehülse 101 sicherzustellen. Alternativ können jedoch auch zwei Aufnahmenuten 125 mit jeweils einem Dichtungselement vorhanden sein.

Aus der Fig. 1 geht ferner hervor, dass in der Hülsenwandung 103 der Aufnahmehülse 101 ein erster Hülsenschlitz 127 und ein dem ersten Hülsenschlitz 127 gegenüberliegender zweiter Hülsenschlitz 129 geformt ist.

In dem Einführstutzen 107, insbesondere in dem ersten Stutzenabschnitt 109, ist ein erster Stutzenschlitz 131 und ein dem ersten Stutzenschlitz 131 gegenüberliegender zweiter Stutzenschlitz 133 geformt.

In dem in Fig. 1 nicht dargestellten eingeführten Zustand des Einführstutzens 107 ist der erste Hülsenschlitz 127 der Aufnahmehülse 101 und der erste Stutzenschlitz 131 des Einführstutzens 107 fluchtend zueinander angeordnet und ist der zweite Hülsenschlitz 129 der Aufnahmehülse 101 und der zweite Stutzenschlitz 133 des Einführstutzens 107 fluchtend zueinander angeordnet, so dass das in Fig. 1 dargestellte Verriegelungselement 135 durch die entsprechenden Schlitze 127, 129, 131 und 133 geführt werden kann, um den Einführstutzen 107 an der Aufnahmehülse 101 zu verriegeln.

Das Verriegelungselement 135 ist hierbei insbesondere aus einem Metall, insbesondere in Form einer gebogenen metallischen Feder, oder aus einem Kunststoff geformt.

Hierbei weist das Verriegelungselement 135 einen ersten Verriegelungsarm 137 und einen dem ersten Verriegelungsarm 137 gegenüberliegenden zweiten Verriegelungsarm 139 auf.

In dem in Fig. 1 nicht dargestellten eingeführten Zustand des Einführstutzens 107 ist der erste Verriegelungsarm 137 zumindest abschnittsweise in dem ersten Hülsenschlitz 127 und dem ersten Stutzenschlitz 133 angeordnet und ist der zweite Verriegelungsarm 139 zumindest abschnittsweise in dem zweiten Hülsenschlitz 129 und dem zweiten Stutzenschlitz 133 angeordnet, so dass das Verriegelungselement 135 den Einführstutzen 107 wirksam an der Aufnahmehülse 101 verriegelt.

Das Verriegelungselement 135 weist einen Verbindungsabschnitt 141 auf, welcher den ersten Verriegelungsarm 137 und den zweiten Verriegelungsarms 139 verbindet, wobei der erste und zweite Verriegelungsarm 137, 139 jeweils federelastisch mit dem Verbindungsabschnitt 141 verbunden sind, um ein Aufspreizen des ersten und zweiten Verriegelungsarms 137, 139 beim Einführen des Verriegelungselements 135 in die Aufnahmehülse 101 zu erreichen.

Somit können die Verriegelungsarme 137, 139 beim Einführen des Verriegelungselements 135 in die Schlitze 127, 129, 131 und 133 wirksam aufgespreizt werden, so dass nach dem Einführen des Verriegelungselements 135 die Verriegelungsarme 137, 139 mit einer Federkraft gegen den Einführstutzen 107 pressen, um eine stabile Verriegelung sicherzustellen.

Aus der Fig. 1 ist ferner zu entnehmen, dass die Hülsenwandung 103 der Aufnahmehülse 101 an dem ersten Hülsenschlitz 127 einen ersten Verriegelungsvorsprung 143 und an dem zweiten Hülsenschlitz 129 einen zweiten Verriegelungsvorsprung 145 aufweist. Der erste und zweite Verriegelungsvorsprung 143, 145 sind als Eingreifpunkte für die jeweiligen Verriegelungshaken 167 des jeweiligen Verriegelungsarms 137, 139 ausgebildet, um eine wirksame Verriegelung sicherzustellen. Auch wenn dies in der Fig. 1 nur schematisch dargestellt ist, weist die Hülsenwandung 103 zwei Gruppen des ersten und zweiten Verriegelungsvorsprungs 143, 145 auf, welche an gegenüberliegenden Seiten der Hülsenwandung 103 angeordnet sind, so dass das Verriegelungselement 135 von beiden Seiten aus eingeführt und wirksam an der Aufnahmehülse 101 verriegelt werden kann.

Wie aus der Fig. 1 zu entnehmen ist, sind die sich gegenüberliegende erste, bzw. zweite Spreizkontur 147, bzw. 149 des ersten bzw. zweiten Verriegelungsarms 137, bzw. 139 nicht gerade geformt, sondern weisen Erhöhungen und Vertiefungen auf, welche sicherstellen, dass der erste und zweite Verriegelungsarm 137 und 139 wirksam aufgespreizt werden können, so dass ein wirksames Einführen des Verriegelungselements 135 in die Schlitze 127, 129, 131 und 133 sichergestellt wird.

Insbesondere weist der erste Verriegelungsarm 137 ferner eine erste Verriegelungskontur 151 auf, und weist der zweite Verriegelungsarm 139 eine der ersten Verriegelungskontur 151 gegenüberliegende zweite Verriegelungskontur 153 auf. Im eingeführten Zustand des Einführstutzens 107 beaufschlagen die erste und zweite Verriegelungskontur 151, 153 den Einführstutzen 107 von einander gegenüberliegenden Seiten mit einer Kraft, um den Einführstutzen 107 an der Aufnahmehülse 101 zu verriegeln.

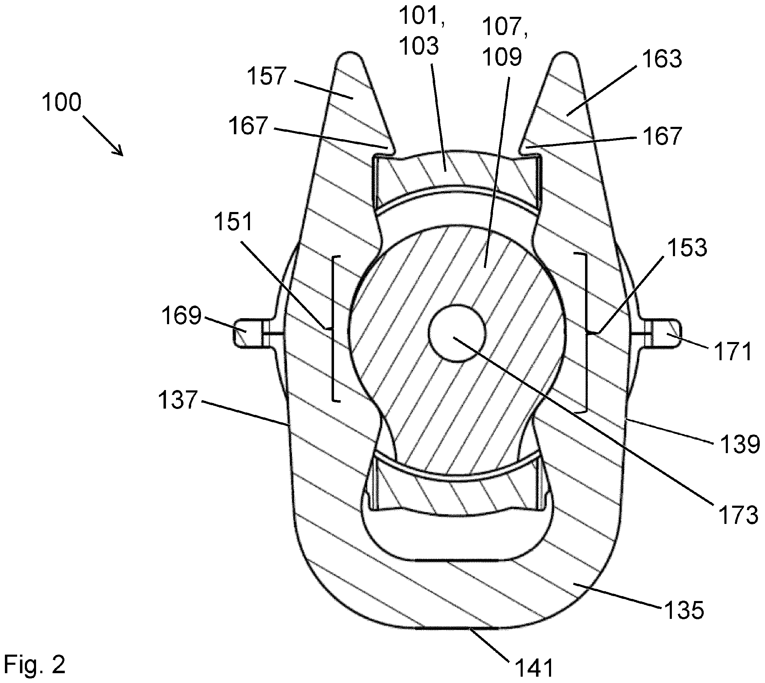

Für eine detaillierte Darstellung der Verriegelung des Einführstutzens 107 in der Aufnahmehülse 101 durch das Verriegelungselement 135 wird auf die nachfolgende Fig. 2 verwiesen.

Ferner geht aus der Fig. 1 hervor, dass der erste Verriegelungsarm 137 durch eine vordere Hülsenschlitzöffnung 155 der ersten Hülsenschlitzes 121 zumindest abschnittsweise in den Hülseninnenraum 105 einführbar ist, wobei ein erstes Armende 157 des ersten Verriegelungsarms 137 durch eine der vorderen Hülsenschlitzöffnung 155 gegenüberliegende hintere Hülsenschlitzöffnung 159 des ersten Hülsenschlitzes 121 wieder aus dem Hülseninnenraum 105 herausführbar ist.

Analog geht ferner aus der Fig. 1 hervor, dass der zweite Verriegelungsarm 139 durch eine vordere Hülsenschlitzöffnung 161 des zweiten Hülsenschlitzes 129 in den Hülseninnenraum 105 einführbar ist, und wobei ein zweites Armende 163 des zweiten Verriegelungsarms 139 durch eine der vorderen Hülsenschlitzöffnung 161 gegenüberliegende hintere Hülsenschlitzöffnung 165 des zweiten Hülsenschlitzes 129 wieder aus dem Hülseninnenraum 105 herausführbar ist.

Somit kann der jeweilige Verriegelungsarm 137, 139 wirksam durch die Schlitze 127, 129, 131 und 133 geführt werden, um den Einführstutzen 107 an der Aufnahmehülse 101 zu verriegeln.

Ferner weist der erste und/oder zweite Verriegelungsarm 137, 139, insbesondere das erste Armende 157 des ersten Verriegelungsarms 137 und/oder das zweite Armende 163 des zweiten Verriegelungsarms 139 jeweils einen Verriegelungshaken 167 auf, welcher ausgebildet ist, die Hülsenwandung 103 zu hintergreifen, insbesondere an den jeweiligen Verriegelungsvorsprüngen 143, 145, um eine verliersichere Verriegelung des Verriegelungselements 135 an der Aufnahmehülse 101 sicherzustellen.

Aus der Fig. 1 geht ferner hervor, dass das Verbindungselement 100 eine erste Stabilisierungsbrücke 169 und eine zweite Stabilisierungsbrücke 171 aufweist, welche an gegenüberliegenden Außenseiten der Hülsenwandung 103 der Aufnahmehülse 101 angeordnet sind, um eine Stabilisierung des Verbindungselements 100 sicherzustellen.

Bei Innendruckbelastung in dem Verbindungselement 100 treten Kräfte auf, welche den Einführstutzen 107 von der Aufnahmehülse 101 wegtreiben, wobei diese Kräfte jedoch über das Verriegelungselement 135 aufgenommen und über die Aufnahmehülse 101 abgeführt werden. Hierbei stellen die Stabilisierungsbrücken 169, 171 bei den entsprechenden besonders mit Kraft-beaufschlagten Stellen der Aufnahmehülse 101 eine wirksame Kraftableitung statt, und ermöglichen dadurch eine wirksame Verriegelung auch bei einem hohen Innendruck.

Insbesondere erstreckt sich die erste Stabilisierungsbrücke 169 an der Außenseite der Hülsenwandung 103 über den ersten Hülsenschlitz 127 und erstreckt sich die zweite Stabilisierungsbrücke 171 an der Außenseite der Hülsenwandung 103 über den zweiten Hülsenschlitz 129.

Insbesondere separiert die erste Stabilisierungsbrücke 169 die vordere Hülsenschlitzöffnung 155 des ersten Hülsenschlitzes 127 von der hinteren Hülsenschlitzöffnung 159 des ersten Hülsenschlitzes 127. Insbesondere separiert die zweite Stabilisierungsbrücke 171 die vordere Hülsenschlitzöffnung 161 des zweiten Hülsenschlitzes 129 von der hinteren Hülsenschlitzöffnung 165 des zweiten Hülsenschlitzes 129.

Somit wird im Bereich der Hülsenschlitze 127, 129, in welchen das Verriegelungselement 135 auf die Hülsenwandung 103 drückt, eine wirksame Stabilisierung sicherstellt.

Insbesondere weist das Verbindungselement 100 einen in Fig. 1 nicht dargestellten Verbindungssteg auf, welcher an der Außenseite der Hülsenwandung 103 der Aufnahmehülse 101 angeordnet und ausgebildet ist, die erste Stabilisierungsbrücke 169 mit der zweiten Stabilisierungsbrücke 171 zu verbinden. Dadurch wird eine weitergehende Stabilisierung der Aufnahmehülse 101 erreicht.

Auch wenn das in der Fig. 1 nicht dargestellt ist, kann an einer Außenseite des Einführstutzens 107, insbesondere des ersten Stutzenabschnitts 109, ein Einführvorsprung angeordnet sein, welcher ausgebildet ist, beim Einführen des Einführstutzens 107 in die Aufnahmehülse 101 in eine an einer Innenseite der Hülsenwandung 103 angeordnete Aufnahme einzugreifen, um eine verdrehsichere Aufnahme des Einführstutzens 107 in der Aufnahmehülse 101 sicherzustellen.

Da in der Ausführungsform gemäß der Fig. 1 kein entsprechender Einführvorsprung des Einführstutzens 107, bzw. keine komplementäre Aufnahme der Aufnahmehülse 101 vorhanden ist, kann der in die Aufnahmehülse 101 eingeführte und verriegelte Einführstutzen 107 in der Ausführungsform gemäß der Fig. 1 verdreht werden.

Fig. 2 zeigt eine perspektivische Ansicht des in Fig. 1 dargestellten Verbindungselements in einem verriegelten Zustand.

In der Fig. 2 ist eine Schnittansicht durch das Verbindungselement 100 dargestellt, wobei der Einführstutzen 107 in der Aufnahmehülse 101 aufgenommen und durch das Verriegelungselement 135 verriegelt ist.

Wie aus der Fig. 2 ersichtlich ist, pressen der erste und zweite Verriegelungsarm 137, 139 des Verriegelungselements 135 von gegenüberliegenden Seiten auf den Einführstutzen 107 und legen diesen dadurch fest. Insbesondere ist die jeweilige erste und zweite Verriegelungskontur 151, 153 des ersten und zweiten Verriegelungsarms 137, 139 so geformt, dass der Einführstutzen 107 wirksam aufgenommen werden kann.

Die an den jeweiligen Armenden 157, 163 des ersten und zweiten Verriegelungsarms 137, 139 angeordneten Verriegelungshaken 167 hintergreifen die Hülsenwandung 103 der Aufnahmehülse 101 und verhindert ein unbeabsichtigtes Herausziehen des Verriegelungselements 135.

Falls die Verriegelung mit Absicht gelöst werden soll, kann der Nutzer beispielsweise mit einem Werkzeug die jeweiligen Armenden 157, 163 des ersten und zweiten Verriegelungsarms 137, 139 wieder auseinanderdrücken, so dass die Verriegelungshaken 167 die Hülsenwandung 103 nicht mehr hintergreifen, und das Verriegelungselement 135 anschließend herausgezogen werden kann.

In der Fig. 2 ist zudem ein Fluidleitungskanal 173 des Einführstutzens 107, sowie die erste und zweite Stabilisierungsrippe 169, 171 dargestellt.

Für weitere Details wird auf die umfangreichen Ausführungen zur Fig. 1 verwiesen.

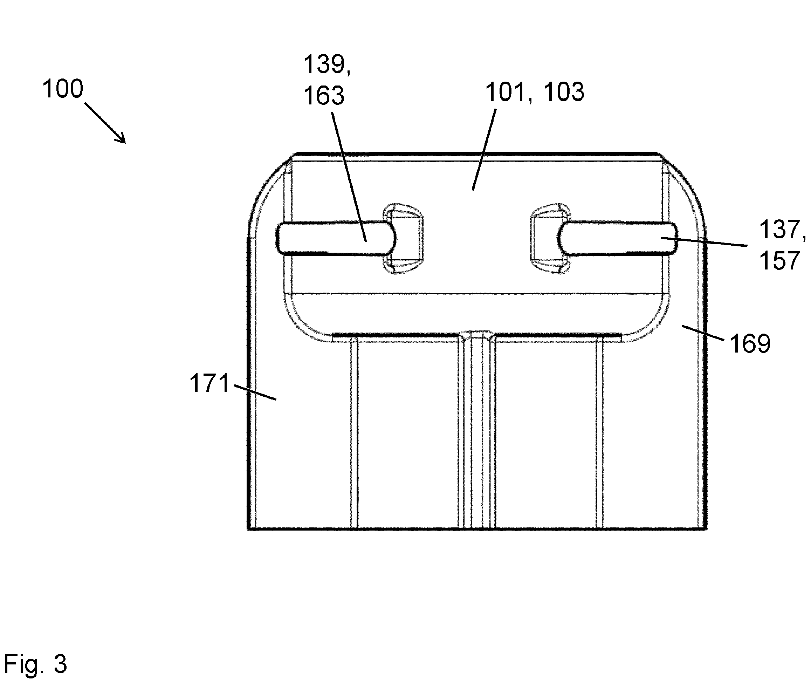

Fig. 3 zeigt eine weitere perspektivische Ansicht des in Fig. 2 dargestellten Verbindungselements in dem verriegelten Zustand.

In der Fig. 3 ist der in die Aufnahmehülse 101 eingeführte Einführstutzen 107 nicht dargestellt. Ferner zeigt die Fig. 3 eine rückseitige Ansicht des Verbindungselements 100, wobei erkennbar ist, dass die jeweiligen Armenden 157, 163 des ersten und zweiten Verriegelungsarms 137, 139 des Verriegelungselements 135 an der Hülsenwandung 103 der Aufnahmehülse 101 verriegelt sind.

Es wird auf die vorangegangenen Ausführungen verwiesen.

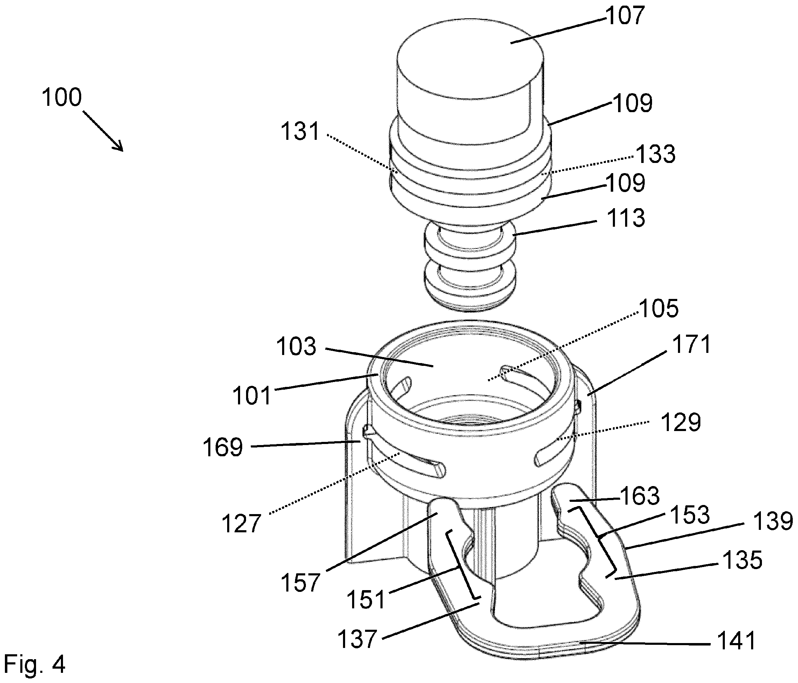

Fig. 4 zeigt eine perspektivische Ansicht ein Verbindungselement gemäß einer weiteren Ausführungsform.

Die in Fig. 4 dargestellte weitere Ausführungsform des Verbindungselements 100 unterscheidet sich von der in den Figuren 1, 2 und 3 dargestellten Ausführungsform lediglich durch die folgenden Merkmale.

Das Verriegelungselement 135 gemäß der in Fig. 4 dargestellten weiteren Ausführungsform weist an den jeweiligen Armenden 157, 163 des ersten und zweiten Verriegelungsarms 137, 139 keine Verriegelungshaken 167 und auch keine Verriegelungsvorsprünge 143, 145 auf, so dass das beabsichtige Lösen der Verriegelung vereinfacht wird.

Zudem sind in der in Fig. 4 dargestellten weiteren Ausführungsform der erste Stutzenschlitz 131 und der zweite Stutzenschlitz 133 des Einführstutzens 107 nicht voneinander separiert, sondern bilden der erste und zweite Stutzenschlitz 131, 133 einen den Einführstutzen 107 vollständig umlaufenden ersten und zweiten Stutzenschlitz 131, 133, durch welche der erste und zweite Verriegelungsarm 137, 139 des Verriegelungselements 135 geführt werden kann.

Aus darstellungstechnischen Gründen wurden in der Fig. 4 im Vergleich zur Fig. 1 die Bezugszeichen reduziert, wobei entsprechende in der Fig. 1 dargestellte Bezugszeichen auf die Fig. 4 übertragbar sind. Für weitere Details wird auf die Ausführungen zu den Figuren 1, 2 und 3 verwiesen.

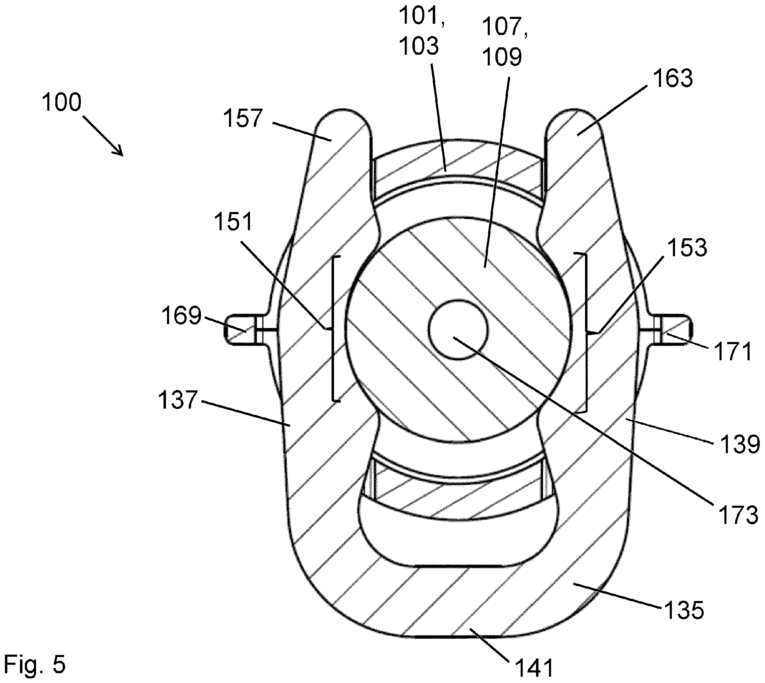

Fig. 5 zeigt eine perspektivische Ansicht des in Fig. 4 dargestellten Verbindungselements in einem verriegelten Zustand.

In der weiteren Ausführungsform gemäß der Fig. 5 kann erkannt werden, dass die an den jeweiligen Armenden 157, bzw. 163 der Verriegelungsarme 137, 139 nicht vorhandenen Verriegelungshaken 167 sicherstellen, dass die Verriegelung, wenn beabsichtigt, einfach wieder gelöst werden kann.

Für weitere Details wird auf die vorangegangenen Ausführungen verwiesen.

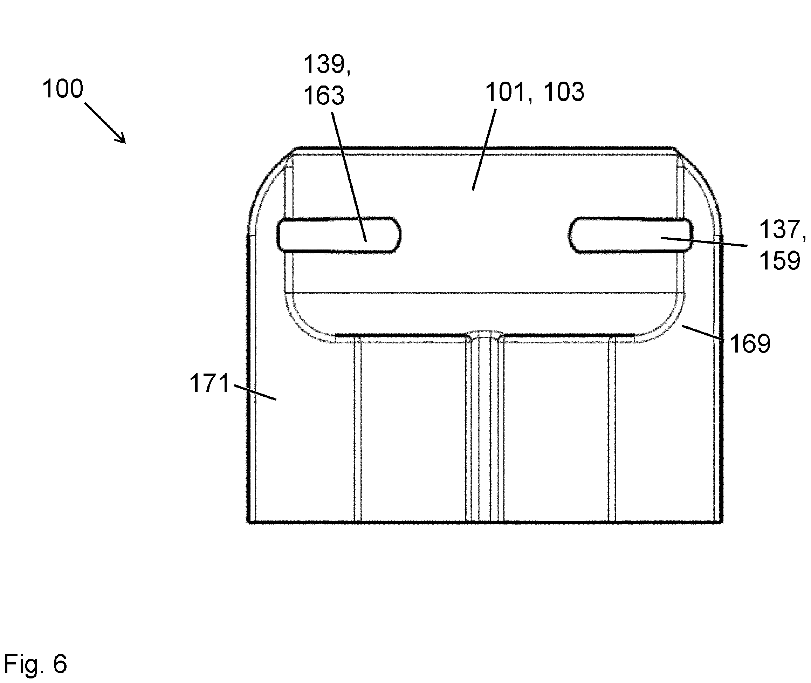

Fig. 6 zeigt eine weitere perspektivische Ansicht des in Fig. 5 dargestellten Verbindungselements in dem verriegelten Zustand.

Für weitere Details wird auf die vorangegangenen Ausführungen verwiesen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Verbindungselement
- 101: Aufnahmehülse
- 103: Hülsenwandung
- 105: Hülseninnenraum
- 107: Einführstutzen
- 109: Erster Stutzenabschnitt
- 111: Erster Stutzenaußendurchmesser
- 113: Zweiter Stutzenabschnitt
- 115: Zweiter Stutzenaußendurchmesser
- 116: Verbindungsabschnitt
- 117: Erster Hülseninnenraumbereich
- 119: Zweiter Hülseninnenraumbereich
- 121: Erster Flansch
- 123: Zweiter Flansch
- 125: Aufnahmenut
- 127: Erster Hülsenschlitz
- 129: Zweiter Hülsenschlitz
- 131: Erster Stutzenschlitz
- 133: Zweiter Stutzenschlitz
- 135: Verriegelungselement
- 137: Erster Verriegelungsarm
- 139: Zweiter Verriegelungsarm
- 141: Verbindungsabschnitt
- 143: Erster Verriegelungsvorsprung der Hülsenwandung
- 145: Zweiter Verriegelungsvorsprung der Hülsenwandung
- 147: Erste Spreizkontur des ersten Verriegelungsarms
- 149: Zweite Spreizkontur des zweiten Verriegelungsarms
- 151: Erste Verriegelungskontur des ersten Verriegelungsarms
- 153: Zweite Verriegelungskontur des zweiten Verriegelungsarms
- 155: Vordere Hülsenschlitzöffnung der ersten Hülsenschlitzes
- 157: Erstes Armende des ersten Verriegelungsarms
- 159: Hintere Hülsenschlitzöffnung des ersten Hülsenschlitzes
- 161: Vordere Hülsenschlitzöffnung des zweiten Hülsenschlitzes
- 163: Zweites Armende des zweiten Verriegelungsarms
- 165: Hintere Hülsenschlitzöffnung des zweiten Hülsenschlitzes
- 167: Verriegelungshaken
- 169: Erste Stabilisierungsbrücke
- 171: Zweite Stabilisierungsbrücke
- 173: Fluidleitungskanal des Einführstutzens

## Patentansprüche

1. Verbindungselement (100) zum Herstellen einer Fluidverbindung mit zwei Fluidleitungen, mit:
einer Aufnahmehülse (101), welche mit einer ersten Fluidleitung fluidtechnisch verbindbar ist, wobei die Aufnahmehülse (101) eine Hülsenwandung (103) aufweist, welche einen Hülseninnenraum (105) begrenzt, wobei in der Hülsenwandung (103) ein erster Hülsenschlitz (127) und ein dem ersten Hülsenschlitz (127) gegenüberliegender zweiter Hülsenschlitz (129) geformt ist,
einem Einführstutzen (107), welcher mit einer zweiten Fluidleitung fluidtechnisch verbindbar ist, wobei der Einführstutzen (107) in den Hülseninnenraum (105) der Aufnahmehülse (101) einführbar ist, um die Fluidverbindung bereitzustellen, wobei in dem Einführstutzen (107) ein erster Stutzenschlitz (131) und ein dem ersten Stutzenschlitz (131) gegenüberliegender zweiter Stutzenschlitz (133) geformt ist, wobei im eingeführten Zustand des Einführstutzens (107) der erste Hülsenschlitz (127) und der erste Stutzenschlitz (131) fluchtend zueinander angeordnet sind und der zweite Hülsenschlitz (129) und der zweite Stutzenschlitz (133) fluchtend zueinander angeordnet sind, und
einem Verriegelungselement (135), welches einen ersten Verriegelungsarm (137) und einen dem ersten Verriegelungsarm (137) gegenüberliegenden zweiten Verriegelungsarm (139) aufweist, wobei im eingeführten Zustand des Einführstutzens (107) der erste Verriegelungsarm (137) zumindest abschnittsweise in dem ersten Hülsenschlitz (127) und dem ersten Stutzenschlitz (131) angeordnet ist und der zweite Verriegelungsarms (139) zumindest abschnittsweise in dem zweiten Hülsenschlitz (129) und dem zweiten Stutzenschlitz (133) angeordnet ist, um den Einführstutzen (107) an der Aufnahmehülse (101) zu verriegeln,
**dadurch gekennzeichnet, daß** das Verbindungselement (100) eine erste Stabilisierungsbrücke (169) und eine zweite Stabilisierungsbrücke (171) aufweist, welche an gegenüberliegenden Außenseiten der Hülsenwandung (103) der Aufnahmehülse (101) angeordnet sind, um eine Stabilisierung des Verbindungselements (100) sicherzustellen,
daß sich die erste Stabilisierungsbrücke (169) an der Außenseite der Hülsenwandung (103) zumindest abschnittsweise über den ersten Hülsenschlitz (127) erstreckt, und daß sich die zweite Stabilisierungsbrücke (171) an der Außenseite der Hülsenwandung (103) zumindest abschnittsweise über den zweiten Hülsenschlitz (129) erstreckt, und
daß die erste Stabilisierungsbrücke (169) eine vordere Hülsenschlitzöffnung (155) des ersten Hülsenschlitzes (127) von einer hinteren Hülsenschlitzöffnung (159) des ersten Hülsenschlitzes (127) separiert, und daß die zweite Stabilisierungsbrücke (171) die vordere Hülsenschlitzöffnung (161) des zweiten Hülsenschlitzes (129) von der hinteren Hülsenschlitzöffnung (165) des zweiten Hülsenschlitzes (129) separiert.

2. Verbindungselement (100) nach Anspruch 1, wobei das Verriegelungselement (135) einen Verbindungsabschnitt (141) aufweist, welcher den ersten Verriegelungsarm (137) mit dem zweiten Verriegelungsarm (139) verbindet, wobei der erste und zweite Verriegelungsarm (137, 139) jeweils federelastisch mit dem Verbindungsabschnitt (141) verbunden sind, um ein Aufspreizen des ersten und zweiten Verriegelungsarms (137, 139) beim Einführen des Verriegelungselements (135) in die Aufnahmehülse (101) zu erreichen.

3. Verbindungselement (100) nach einem der vorangehenden Ansprüche, wobei der erste Verriegelungsarm (137) eine erste Verriegelungskontur (151) aufweist, und wobei der zweite Verriegelungsarm (139) eine der ersten Verriegelungskontur (151) gegenüberliegende zweite Verriegelungskontur (153) aufweist, wobei im eingeführten Zustand des Einführstutzens (107) die erste und zweite Verriegelungskontur (151, 153) den Einführstutzen (107) mit einer Kraft beaufschlagen, um den Einführstutzen (107) an der Aufnahmehülse (101) zu verriegeln.

4. Verbindungselement (100) nach einem der vorangehenden Ansprüche, wobei der erste Verriegelungsarm (137) durch eine vordere Hülsenschlitzöffnung (155) des ersten Hülsenschlitzes (127) in den Hülseninnenraum (105) einführbar ist, und wobei ein erstes Armende (157) des ersten Verriegelungsarms (137) durch eine der vorderen Hülsenschlitzöffnung (155) gegenüberliegende hintere Hülsenschlitzöffnung (159) des ersten Hülsenschlitzes (127) wieder aus dem Hülseninnenraum (105) herausführbar ist, wobei der zweite Verriegelungsarm (139) durch eine vordere Hülsenschlitzöffnung (161) des zweiten Hülsenschlitzes (129) in den Hülseninnenraum (105) einführbar ist, und wobei ein zweites Armende (163) des zweiten Verriegelungsarms (139) durch eine der vorderen Hülsenschlitzöffnung (161) gegenüberliegende hintere Hülsenschlitzöffnung (165) des zweiten Hülsenschlitzes (129) wieder aus dem Hülseninnenraum (105) herausführbar ist.

5. Verbindungselement (100) nach einem der vorangehenden Ansprüche, wobei das erste Verriegelungsarm (137) und/oder der zweite Verriegelungsarm (139), insbesondere ein erstes Armende (157) des ersten Verriegelungsarms (137) und/oder ein zweites Armende (163) des zweiten Verriegelungsarms (139), jeweils einen Verriegelungshaken (167) aufweist, welcher ausgebildet ist, die Hülsenwandung (103) zu hintergreifen, um eine verliersichere Verriegelung des Verriegelungselements (135) an der Aufnahmehülse (101) sicherzustellen.

6. Verbindungselement (100) nach Anspruch 5, wobei die Hülsenwandung (103) an dem ersten Hülsenschlitz (127) einen ersten Verriegelungsvorsprung (143) und an dem zweiten Hülsenschlitz (129) einen zweiten Verriegelungsvorsprung (145) aufweist, wobei der Verriegelungshaken (167) des ersten Verriegelungsarms (137) ausgebildet ist, den ersten Verriegelungsvorsprung (143) zu hintergreifen, und wobei der Verriegelungshaken (167) des zweiten Verriegelungsarms (139) ausgebildet ist, den zweiten Verriegelungsvorsprung (145) zu hintergreifen, um eine verliersichere Verriegelung des Verriegelungselements (135) an der Aufnahmehülse (101) sicherzustellen.

7. Verbindungselement (100) nach einem der vorangehenden Ansprüche, wobei der Einführstutzen (107) einen ersten Stutzenabschnitt (109) mit einem ersten Stutzenaußendurchmesser (111) und einen zweiten Stutzenabschnitt (113) mit einem zweiten Stutzenaußendurchmesser (115) aufweist, welcher geringer als der erste Stutzenaußendurchmesser (111) ist, wobei der Hülseninnenraum (105) einen zweiten Hülseninnenraum (105) zur Aufnahme des zweiten Stutzenabschnitts (113) und einen ersten Hülseninnenraum (105) zur Aufnahme des ersten Stutzenabschnitts (109) aufweist.

8. Verbindungselement (100) nach einem der vorangehenden Ansprüche, wobei der Einführstutzen (107), insbesondere der zweite Stutzenabschnitt (113) eine Aufnahmenut (125) aufweist, in welcher ein Dichtungselement aufgenommen ist.

9. Verbindungselement (100) nach einem der vorangehenden Ansprüche, wobei der Einführstutzen (107), insbesondere der zweite Stutzenabschnitt (113), einen den Einführstutzen (107) umlaufenden ersten Flansch (121) und einen den Einführstutzen (107) umlaufenden zweiten Flansch (123) aufweist, wobei der erste und zweite Flansch (121, 123) insbesondere die Aufnahmenut (125) zur Aufnahme des Dichtungselements begrenzen.

10. Verbindungselement (100) nach einem der vorangehenden Ansprüche, wobei das Verbindungselement (100) einen Verbindungssteg aufweist, welcher an der Außenseite der Hülsenwandung (103) der Aufnahmehülse (101) angeordnet und ausgebildet ist, die erste Stabilisierungsbrücke (169) mit der zweiten Stabilisierungsbrücke (171) zu verbinden.

11. Verbindungselement (100) nach einem der vorangehenden Ansprüche, wobei das Verriegelungselement (135) aus einem Metall, insbesondere in Form einer gebogenen metallischen Feder, oder aus einem Kunststoff geformt ist.

12. Verbindungselement (100) nach einem der vorangehenden Ansprüche, wobei an einer Außenseite des Einführstutzens (107), insbesondere des ersten Stutzenabschnitts (109), ein Einführvorsprung angeordnet ist, welcher ausgebildet ist, beim Einführen des Einführstutzens (107) in die Aufnahmehülse (101) in eine an einer Innenseite der Hülsenwandung (103) angeordnete Aufnahme einzugreifen, um eine verdrehsichere Aufnahme des Einführstutzens (107) in der Aufnahmehülse (101) sicherzustellen.

13. Fluidverbindungsanordnung (100), umfassend ein Verbindungselement (100) nach einem der vorangehenden Ansprüche, eine erste Fluidleitung und eine zweite Fluidleitung,
wobei ein erstes Leitungsende der ersten Fluidleitung mit der Aufnahmehülse (101) verbunden ist, und wobei ein zweites Leitungsende der zweiten Fluidleitung mit dem Einführstutzen (107) verbunden ist.

## Claims

1. Connecting element (100) for establishing a fluid connection with two fluid lines, comprising:
a receiving sleeve (101), which is fluidically connectable to a first fluid line, wherein the receiving sleeve (101) has a sleeve wall (103), which delimits a sleeve interior (105), wherein a first sleeve slot (127) and a second sleeve slot (129) opposite to the first sleeve slot (127) are formed in the sleeve wall (103),
an insertion nozzle (107), which is fluidically connectable to a second fluid line, wherein the insertion nozzle (107) is insertable into the sleeve interior (105) of the receiving sleeve (101) in order to provide the fluid connection, wherein a first nozzle slot (131) and a second nozzle slot (133) opposite to the first nozzle slot (131) are formed in the insertion nozzle (107), wherein in the inserted state of the insertion nozzle (107) the first sleeve slot (127) and the first nozzle slot (131) are arranged in alignment with one another and the second sleeve slot (129) and the second nozzle slot (133) are arranged in alignment with one another, and
a locking element (135), which has a first locking arm (137) and a second locking arm (139) opposite to the first locking arm (137), wherein in the inserted state of the insertion nozzle (107) the first locking arm (137) is arranged at least in sections in the first sleeve slot (127) and the first nozzle slot (131) and the second locking arm (139) is arranged at least in sections in the second sleeve slot (129) and the second nozzle slot (133) in order to lock the insertion nozzle (107) to the receiving sleeve (101),
**characterized in that** the connecting element (100) has a first stabilizing bridge (169) and a second stabilizing bridge (171), which are arranged on opposite outer sides of the sleeve wall (103) of the receiving sleeve (101) in order to ensure a stabilization of the connecting element (100),
that the first stabilizing bridge (169) extends at least in sections over the first sleeve slot (127) on the outer side of the sleeve wall (103), and that the second stabilizing bridge (171) extends at least in sections over the second sleeve slot (129) on the outer side of the sleeve wall (103), and that
the first stabilizing bridge (169) separates a front sleeve slot opening (155) of the first sleeve slot (127) from a rear sleeve slot opening (159) of the first sleeve slot (127), and that the second stabilizing bridge (171) separates the front sleeve slot opening (161) of the second sleeve slot (129) from the rear sleeve slot opening (165) of the second sleeve slot (129).

2. Connecting element (100) according to claim 1, wherein the locking element (135) has a connecting section (141), which connects the first locking arm (137) to the second locking arm (139), wherein the first and second locking arms (137, 139) are each connected to the connecting section (141) in a spring elastic manner in order to achieve a spreading of the first and second locking arms (137, 139) when inserting the locking element (135) into the receiving sleeve (101).

3. Connecting element (100) according to one of the preceding claims, wherein the first locking arm (137) has a first locking contour (151), and wherein the second locking arm (139) has a second locking contour (153) opposite to the first locking contour (151), wherein in the inserted state of the insertion nozzle (107) the first and second locking contours (151, 153) apply a force to the insertion nozzle (107) in order to lock the insertion nozzle (107) to the receiving sleeve (101).

4. Connecting element (100) according to one of the preceding claims, wherein the first locking arm (137) is insertable into the sleeve interior (105) through a front sleeve slot opening (155) of the first sleeve slot (127), and wherein a first arm end (157) of the first locking arm (137) is leadable out of the sleeve interior (105) again through a rear sleeve slot opening (159) of the first sleeve slot (127) opposite to the front sleeve slot opening (155), wherein the second locking arm (139) is insertable into the sleeve interior (105) through a front sleeve slot opening (161) of the second sleeve slot (129), and wherein a second arm end (163) of the second locking arm (139) is leadable out of the sleeve interior (105) again through a rear sleeve slot opening (165) of the second sleeve slot (129) opposite to the front sleeve slot opening (161).

5. Connecting element (100) according to one of the preceding claims, wherein the first locking arm (137) and/or the second locking arm (139), in particular a first arm end (157) of the first locking arm (137) and/or a second arm end (163) of the second locking arm (139), each have a locking hook (167), which is adapted to engage behind the sleeve wall (103) in order to ensure a locking of the locking element (135) on the receiving sleeve (101) in a loss-proof manner.

6. Connecting element (100) according to claim 5, wherein the sleeve wall (103) has a first locking projection (143) on the first sleeve slot (127) and a second locking projection (145) on the second sleeve slot (129), wherein the locking hook (167) of the first locking arm (137) is adapted to engage behind the first locking projection (143), and wherein the locking hook (167) of the second locking arm (139) is adapted to engage behind the second locking projection (145) in order to ensure a locking of the locking element (135) on the receiving sleeve (101) in a loss-proof manner.

7. Connecting element (100) according to one of the preceding claims, wherein the insertion nozzle (107) has a first nozzle section (109) with a first nozzle outer diameter (111) and a second nozzle section (113) with a second nozzle outer diameter (115), which is smaller than the first nozzle outer diameter (111), wherein the sleeve interior (105) has a second sleeve interior (105) for receiving the second nozzle section (113) and a first sleeve interior (105) for receiving the first nozzle section (109).

8. Connecting element (100) according to one of the preceding claims, wherein the insertion nozzle (107), in particular the second nozzle section (113), has a receiving groove (125), in which a sealing element is received.

9. Connecting element (100) according to one of the preceding claims, wherein the insertion nozzle (107), in particular the second nozzle section (113), has a first flange (121) circumferentially surrounding the insertion nozzle (107) and a second flange (123) circumferentially surrounding the insertion nozzle (107), wherein the first and second flanges (121, 123) in particular delimit the receiving groove (125) for receiving the sealing element.

10. Connecting element (100) according to one of the preceding claims, wherein the connecting element (100) has a connecting web, which is arranged on the outer side of the sleeve wall (103) of the receiving sleeve (101) and is adapted to connect the first stabilizing bridge (169) to the second stabilizing bridge (171).

11. Connecting element (100) according to one of the preceding claims, wherein the locking element (135) is formed from a metal, in particular in the form of a bent metallic spring, or from a plastic.

12. Connecting element (100) according to one of the preceding claims, wherein an insertion projection is arranged on an outer side of the insertion nozzle (107), in particular of the first nozzle section (109), which insertion projection is adapted to engage in a receptacle arranged on an inner side of the sleeve wall (103) when the insertion nozzle (107) is inserted into the receiving sleeve (101) in order to ensure a rotationally secure reception of the insertion nozzle (107) in the receiving sleeve (101).

13. Fluid connection arrangement (100), comprising a connecting element (100) according to one of the preceding claims, a first fluid line and a second fluid line,
wherein a first line end of the first fluid line is connected to the receiving sleeve (101), and wherein a second line end of the second fluid line is connected to the insertion nozzle (107).

## Revendications

1. Elément de connexion (100) pour établir une connexion fluidique avec deux conduites de fluide, comprenant :
un manchon de réception (101) pouvant être raccordé fluidiquement à une première conduite de fluide, le manchon de réception (101) comportant une paroi de manchon (103) délimitant un intérieur de manchon (105), une première fente de manchon (127) et une seconde fente de manchon (129) opposée à la première fente de manchon (127) étant formées dans la paroi de manchon (103),
une buse d'insertion (107) connectable fluidiquement à une seconde conduite de fluide, la buse d'insertion (107) étant insérable à l'intérieur du manchon (105) du manchon de réception (101) afin d'assurer la connexion fluidique, une première fente de buse (131) et une seconde fente de buse (133) opposée à la première fente de buse (131) étant formées dans la buse d'insertion (107), la première fente de manchon (127) et la première fente de buse (131) étant alignées, et la seconde fente de manchon (129) et la seconde fente de buse (133) étant alignées, et
un élément de verrouillage (135) qui présente un premier bras de verrouillage (137) et un second bras de verrouillage (139) opposé au premier bras de verrouillage (137). À l'état inséré de la buse d'insertion (107), le premier bras de verrouillage (137) est disposé au moins par sections dans la première fente de manchon (127) et la première fente de buse (131) et le second bras de verrouillage (139) est disposé au moins par sections dans la seconde fente de manchon (129) et la seconde fente de buse (133) afin de verrouiller la buse d'insertion (107) sur le manchon de réception (101),
**caractérisé en ce que** l'élément de connexion (100) comporte un premier pont stabilisateur (169) et un deuxième pont stabilisateur (171), qui sont disposés sur les côtés extérieurs opposés de la paroi du manchon (103) du manchon de réception (101) afin d'assurer une stabilisation de l'élément de connexion (100),
que le premier pont stabilisateur (169) s'étend au moins par sections sur la première fente de manchon (127) sur le côté extérieur de la paroi de manchon (103), et que le deuxième pont stabilisateur (171) s'étend au moins par sections sur la deuxième fente de manchon (129) sur le côté extérieur de la paroi de manchon (103), et que
le premier pont stabilisateur (169) sépare une ouverture de fente de manchon avant (155) de la première fente de manchon (127) d'une ouverture de fente de manchon arrière (159) de la première fente de manchon (127), et que le deuxième pont stabilisateur (171) sépare l'ouverture de fente de manchon avant (161) de la deuxième fente de manchon (129) de l'ouverture de fente de manchon arrière (165) de la deuxième fente de manchon (129).

2. Elément de connexion (100) selon la revendication 1, dans lequel l'élément de verrouillage (135) présente une section de connexion (141) qui relie le premier bras de verrouillage (137) au deuxième bras de verrouillage (139), les premier et deuxième bras de verrouillage (137, 139) étant chacun reliés à la section de connexion (141) de manière élastique à ressort afin d'obtenir un écartement des premier et deuxième bras de verrouillage (137, 139) lors de l'insertion de l'élément de verrouillage (135) dans le manchon de réception (101).

3. Elément de connexion (100) selon l'une des revendications précédentes, dans lequel le premier bras de verrouillage (137) présente un premier contour de verrouillage (151), et dans lequel le deuxième bras de verrouillage (139) présente un deuxième contour de verrouillage (153) opposé au premier contour de verrouillage (151), dans lequel, dans l'état inséré de la buse d'insertion (107), les premier et deuxième contours de verrouillage (151, 153) appliquent une force sur la buse d'insertion (107) afin de verrouiller la buse d'insertion (107) sur le manchon de réception (101).

4. Elément de connexion (100) selon l'une des revendications précédentes, dans lequel le premier bras de verrouillage (137) peut être inséré à l'intérieur du manchon (105) par une ouverture avant (155) de la première fente (127), et dans lequel une première extrémité (157) du premier bras de verrouillage (137) peut être extraite de l'intérieur du manchon (105) par une ouverture arrière (159) de la première fente (127) opposée à l'ouverture avant (155), le second bras de verrouillage (139) peut être inséré à l'intérieur du manchon (105) par une ouverture avant (161) de la seconde fente (129), et dans lequel une seconde extrémité (163) du second bras de verrouillage (139) peut être extraite de l'intérieur du manchon (105) par une ouverture arrière (165) de la seconde fente (129) opposée à l'ouverture avant (161).

5. Elément de connexion (100) selon l'une des revendications précédentes, dans lequel le premier bras de verrouillage (137) et/ou le deuxième bras de verrouillage (139), en particulier une première extrémité de bras (157) du premier bras de verrouillage (137) et/ou une deuxième extrémité de bras (163) du deuxième bras de verrouillage (139), présentent chacun un crochet de verrouillage (167) qui est adapté pour s'engager derrière la paroi de manchon (103) afin de garantir un verrouillage de l'élément de verrouillage (135) sur le manchon de réception (101) de manière infaillible.

6. Elément de connexion (100) selon la revendication 5, dans lequel la paroi du manchon (103) présente une première saillie de verrouillage (143) sur la première fente du manchon (127) et une seconde saillie de verrouillage (145) sur la seconde fente du manchon (129), le crochet de verrouillage (167) du premier bras de verrouillage (137) étant adapté pour s'engager derrière la première saillie de verrouillage (143), et le crochet de verrouillage (167) du second bras de verrouillage (139) étant adapté pour s'engager derrière la seconde saillie de verrouillage (145) afin d'assurer un verrouillage inviolable de l'élément de verrouillage (135) sur le manchon de réception (101).

7. Elément de connexion (100) selon l'une des revendications précédentes, dans lequel la buse d'insertion (107) présente une première section de buse (109) avec un premier diamètre extérieur de buse (111) et une seconde section de buse (113) avec un second diamètre extérieur de buse (115), qui est plus petit que le premier diamètre extérieur de buse (111), l'intérieur du manchon (105) présentant un second intérieur de manchon (105) pour recevoir la seconde section de buse (113) et un premier intérieur de manchon (105) pour recevoir la première section de buse (109).

8. Elément de connexion (100) selon l'une des revendications précédentes, dans lequel la buse d'insertion (107), en particulier la deuxième section de buse (113), présente une rainure de réception (125), dans laquelle est reçu un élément d'étanchéité.

9. Elément de connexion (100) selon l'une des revendications précédentes, dans lequel la buse d'insertion (107), en particulier la deuxième section de buse (113), présente une première bride (121) entourant circonférentiellement la buse d'insertion (107) et une deuxième bride (123) entourant circonférentiellement la buse d'insertion (107), les première et deuxième brides (121, 123) délimitant en particulier la rainure de réception (125) destinée à recevoir l'élément d'étanchéité.

10. Elément de connexion (100) selon l'une des revendications précédentes, dans lequel l'élément de connexion (100) comporte une nervure de connexion, qui est disposée sur le côté extérieur de la paroi de manchon (103) du manchon de réception (101) et est adaptée pour relier le premier pont de stabilisation (169) au deuxième pont de stabilisation (171).

11. Elément de connexion (100) selon l'une des revendications précédentes, dans lequel l'élément de verrouillage (135) est formé d'un métal, notamment sous la forme d'un ressort métallique courbé, ou d'une matière plastique.

12. Elément de connexion (100) selon l'une des revendications précédentes, dans lequel une saillie d'insertion est disposée sur un côté extérieur de la buse d'insertion (107), en particulier de la première section de buse (109), laquelle saillie d'insertion est adaptée pour s'engager dans un réceptacle disposé sur un côté intérieur de la paroi du manchon (103) lorsque la buse d'insertion (107) est insérée dans le manchon de réception (101) afin de garantir une réception sûre en rotation de la buse d'insertion (107) dans le manchon de réception (101).

13. Dispositif de connexion fluidique (100), comprenant un élément de connexion (100) selon l'une des revendications précédentes, une première conduite de fluide et une seconde conduite de fluide.
dans lequel une première extrémité de ligne de la première ligne de fluide est connectée au manchon de réception (101), et dans lequel une seconde extrémité de ligne de la seconde ligne de fluide est connectée à la buse d'insertion (107).
